Europäisches Patentamt

European Patent Office

Office européen des brevets

(19)

(11) Publication number: **0 229 029 B1**

# EUROPEAN PATENT SPECIFICATION

(12)

(45) Date of publication of patent specification: **11.12.91**   (51) Int. Cl.⁵: **G21C 7/00, G21C 5/10**

(21) Application number: **87300066.5**

(22) Date of filing: **06.01.87**

(54) **Retaining pin assembly for control-rod guide-tubes in nuclear reactors.**

(30) Priority: **07.01.86 US 816782**

(43) Date of publication of application:
**15.07.87 Bulletin 87/29**

(45) Publication of the grant of the patent:
**11.12.91 Bulletin 91/50**

(84) Designated Contracting States:
**BE CH ES FR IT LI**

(56) References cited:
**EP-A- 0 130 840**
**EP-A- 0 152 207**
**FR-A- 2 326 763**

**NUCLEAR ENGINEERING INTERNATIONAL,
vol. 29, no. 362, November 1984, pages 29-33,
Sutton, Surrrey, GB; L. GUICHERD: "Dealing
with control rod guide tube support pin
cracking in french PWRs"**

(73) Proprietor: **WESTINGHOUSE ELECTRIC COR-
PORATION
Westinghouse Building Gateway Center
Pittsburgh Pennsylvania 15222(US)**

(72) Inventor: **Popalis, Craig Hamilton
3651 Maule Road
Pensacola, FL 32503(US)**
Inventor: **Hopkins, Ronald Jacobs
8270 Strasburg Road
Pensacola, FL 32514(US)**
Inventor: **Land, John Thomas
4020 Bedevere Drive
Pensacola, FL 32514(US)**
Inventor: **Obermeyer, Franklin Delano
1085 Farmington Road
Pensacola, FL 32504(US)**

(74) Representative: **van Berlyn, Ronald Gilbert
23, Centre Heights
London, NW3 6JG(GB)**

## Description

The present invention relates generally to nuclear reactors and, more particularly, to a retaining pin assembly for a control-rod guide tube therein.

As set forth in Applicant's U.S-A- 4,173,513, for example, the control rods of a nuclear reactor ordinarily extend through and are axially movable in control-rod guide tubes forming part of the so-called upper reactor internals. Each control-rod guide tube has one end thereof affixed to a first structural member, its opposite end being connected to a second structural member by means of retaining pins secured to a lateral end flange of the guide tube and inserted into a bore formed in the second structural member; in a pressurized-water reactor, such as shown in the above-mentioned patent specification, the first and second structural members typically are the upper support plate of the upper reactor internals and the upper core plate, respectively.

In Applicant's EP-A-152 207 there is disclosed a guide-tube retaining pin assembly comprising a retaining pin which has a first pin portion adapted to be inserted through a bore or passage in the end flange of the associated control-rod guide tube, and has a second pin portion comprising a split-leaf base section adapted to be inserted into a bore of the upper core plate so as to form therewith a friction fit. The retaining pin has an intermediate shoulder adapted to seat in a counter-bore of the passage in the guide-tube end flange, and its first pin portion is adapted to threadedly receive a nut for securing the retaining pin firmly to the end flange of the control-rod guide tube. In order to prevent retrograde rotation of the nut relative to the retaining pin after it has been properly torqued, both the nut and the retaining pin are provided, on peripheral surface portions thereof, with crimp-receiving formations interlocked with a crimp cap telescopically fit over the crimp-receiving portions of the retaining pin and the nut and crimped thereto.

During use, the retaining pins secured to the end flanges of the respective control-rod guide tubes and frictionally engaged in the respective bores of the core plate are subject to considerable bending loads resulting from vibration and from reactor-coolant cross-flow. These bending loads introduce stresses which can cause cracking of retaining pins especially in shank areas thereof forming part of the pin portions which extend through the passages in the guide-tube flange. If cracking of a retaining pin does occur and fragments of the failed pin enter the cooling loop, considerable damage can be done to components of the cooling system, such as heat exchangers and pumps. Therefore, and in an endeavor to safeguard against such damage, it is customary to monitor for pin failure and, if pin failure is detected, to remove and replace the failed retaining pin or pins as promptly as practicable.

It is the principal object of the invention to provide an improved retaining pin assembly less likely to fail and to contaminate the cooling system.

The invention accordingly resides in a nuclear reactor including a plurality of control-rod guide tubes each of which has a radial flange and is connected to a structural member by means of retaining pin assemblies at least one of which comprises a retaining pin and a nut, said retaining pin having a first pin portion which extends through a passage in the flange of the associated guide tube and has said nut threadedly engaged therewith so as to fasten the retaining pin securely to said flange, and said retaining pin having a second pin portion which comprises a split-leaf base section and extends into a bore of said structural member, characterized in that said second pin portion includes a solid body section which is disposed adjacent the end thereof adjoining the first pin portion and which has a diametral dimension providing a close-clearance fit between the solid body section and the wall of said bore, said split-leaf base section of the second pin portion comprising a split stem which has a smaller diametral dimension than the solid body section and extends axially therefrom, and which split stem terminates in a split end section maintained radially biased against the wall of the bore.

This arrangement ensures that transverse loads applied to the retaining pin will be reacted, not by the split-leaf base section thereof, but substantially in pure shear by the solid body section located on the second pin portion proximate to the flange of the control-rod guide tube. As a result, bending loads on the retaining pin are substantially reduced and bending stresses in a pin area which otherwise would be most susceptible to stress corrosion cracking, namely, the shank area of the first pin portion, are greatly relieved.

The retaining pin preferably is a unitary member made of a material having a high cracking resistance, such as, preferably, strain-hardened 316 stainless steel. The nut may be made of a similar material, such as, preferably, 304 stainless steel.

In order to prevent the nut on the first pin portion of the retaining pin from loosening itself after it has been torqued, an end portion of the first pin portion adjacent the free end thereof is provided with crimp-receiving formations, preferably longitudinal grooves formed on the outer periphery thereof, and the nut has a tubular crimpable extension which is crimped into locking engagement with the crimp-receiving formations on the first pin portion. The tubular crimpable extension is formed integral with the nut and, hence, neither requires individual handling as a separate item during assembly nor is likely to separate itself from the nut and retaining pin during use.

Furthermore, the improved retaining pin assembly includes a nut retainer in the form of a longitudinally split sleeve-like member which substantially encircles part of the nut and is connected thereto, and which has lateral tabs engaged in a groove defined in the wall of a counterbore that is formed in the passage of the guide tube flange from the side thereof distant from said structural member, and in which counterbore both the nut and the nut retainer are seated. This nut retainer arrangement will serve as a sheer absolute safeguard against system contamination by loose pin assembly parts insofar as, in the unlikely event that pin failure does occur, the nut retainer will retain the nut and, hence, the failed retaining pin part firmly in position, thus preventing their being flushed into the system by the coolant flow. The nut retainer is connected to the nut preferably by being crimped thereto, for which purpose the nut is provided with crimp-receiving formations. The latter preferably are spline grooves between longitudinal splines formed on the outer periphery of the nut primarily for the purpose of enabling the nut to be engaged with, and torqued by means of, a suitable tool requiring less space than a wrench.

Finally, it should be noted that the improved retaining pin assembly offers a further advantage, in addition to the advantages set forth above, in that it is a non-welded assembly requiring no welding.

A preferred embodiment of the invention will now be described, by way of example only, with reference to the accompanying drawings, in which:-

Figure 1 is an elevational and partly sectional view of a retaining pin assembly embodying the invention, and of portions of an upper core plate and an end flange of a control-rod guide tube;

Fig. 2 is a top plan detail view of the assembly shown in Fig. 1; and

Fig. 3 is a top plan view of the nut retainer of the retaining pin assembly.

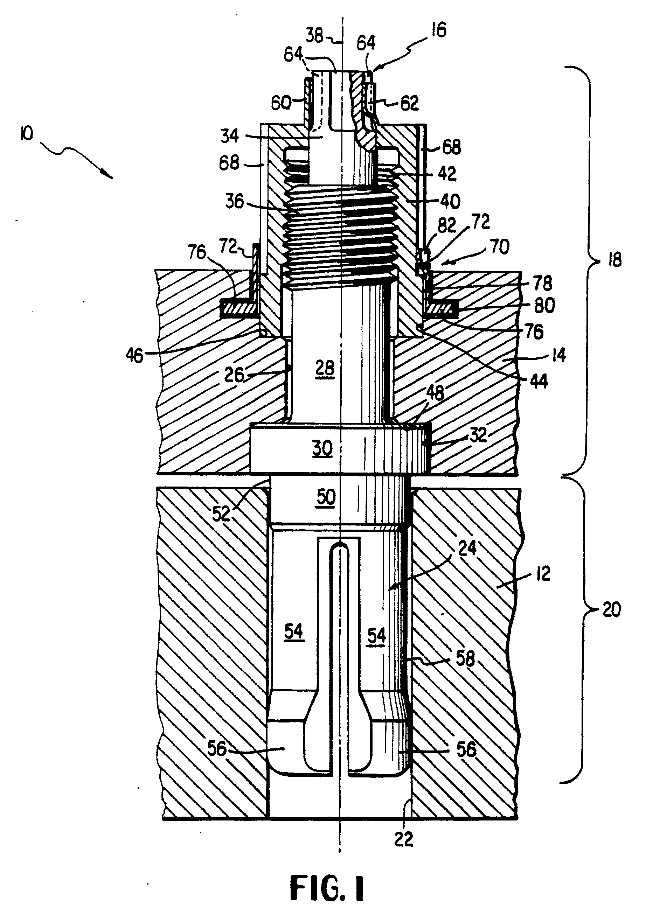

With particular reference to Fig. 1, the retaining pin assembly illustrated therein and generally designated with reference numeral 10 may be installed ab initio or may be retrofitted if and when it becomes necessary to replace a used retaining pin assembly. Although but one retaining pin assembly 10 is shown and described herein, it will be understood that each guide tube has associated therewith several such retaining pin assemblies arrayed circumferentially about the guide tube in spaced relationship with respect to each other and preferably paired radially side-by-side.

As seen from Fig. 1, the retaining pin assembly 10 comprises a retaining pin 16 which consists of what will be referred to herein as an upper or first pin portion 18 associated with the guide-tube flange 14, and a lower or second pin portion 20 associated with the upper core plate 12. The lower pin portion 20 comprises a split-leaf base section 24 which is received in an associated bore 22 formed in the core plate 12 and shown herein as extending therethrough (although it could be a blind bore), and the upper pin portion 18 has a shank 28 which extends through an associated bore or passage 26 formed through the annular end flange 14 of the guide tube (not shown). The retaining pin 16 has an intermediate annular shoulder 30 formed, preferably integral therewith, on the first pin portion 18 adjacent the lower end thereof, and which shoulder 30 is seated in a counter-bore 32 formed in the passage 26 from the lower surface of the guide-tube end flange 14, that is to say, from its surface proximate to and facing the core plate 12. The shank 28 has an externally threaded portion 36 protruding from the passage 26, and an end portion 34 extending axially from the threaded portion 36.

The retaining pin assembly 10 includes, in addition to the retaining pin 16, an elongated securing and lock nut 40 with internal threads 42 threadedly engaged with the externally threaded portion 36 of the retaining pin 16. The nut 40 has a lower end portion thereof disposed in a counter-bore 44 of the passage 26 formed therein from the upper surface of the guide-tube end flange 14, i.e. from the surface thereof distant and facing away from the core plate 12. The bottom of the counter-bore 44 defines an annular surface 46 which coacts with the nut 40, when torqued, to draw the annular shoulder 30 up against the annular end surface 48 of the lower counter-bore 32 and thereby to fasten the retaining pin 16 securely to the guide-tube end flange 14.

A principal feature of the improved retaining pin assembly 10 resides in the second or lower pin portion 20 comprising the above-mentioned split-leaf base portion 24 and, in addition, a solid and preferably cylindrical body section 50 which is disposed adjacent the end of the lower pin portion adjoining the first or upper pin portion, and has a diametral dimension providing a close-clearance fit between the solid body section, at the outer periphery 52 thereof, and the wall of the bore 22. A possible modification would be to omit the annular shoulder 30 and to extend the solid body section 50 axially into the upper pin portion far enough to enable it to functionally take the place of the shoulder 30. The split-leaf base section 24 of the lower pin portion 20 comprises a split stem 54 which has a smaller diametral dimension than the solid body section 50 so that its outer periphery 58 is spaced from the wall of the bore 22, and which split stem 54 extends axially from the solid body section 50 and terminates in a split end section 56 that is maintained radially biased against the wall of the bore 22.

The improved retaining pin configuration described above ensures that lateral loads applied to the retaining pin 16 in a direction transverse to its longitudinal axis 38 will be reacted by the lower pin portion 20 through the solid body section 50 substantially in pure shear, rather than through the leaves 54,56/ 54, 56 of the split-leaf base section 24, so that bending loads on the retaining pin 16 will be substantially reduced and stresses on its shank 28 will be greatly relieved. Thus, the retaining pin 16 is much less likely to undergo stress cracking and to fail.

Assuming a thickness of about 3.80cm for the guide-tube flange 14 and of about 5.70cm for the upper core plate 12, and assuming further a diameter of about 2.70cm for each bore such as bore 22, the following examples of approximate dimensions are given:- Length of the retaining pin 16 = 13.35cm; length of the lower pin portion 20 = 5.70cm; diameter of the shank 28 = 1.80cm; diameter of the annular shoulder 30 = 3.40cm; diameter of the solid body section 50 = 2.69cm; diameter of the split stem 54 = 2.55cm; and diameter of the split end section 56 when relaxed (i.e. uncompressed) = 2.72cm. Given these dimensions, the radial clearance between the split stem 54 and the wall of the bore 22 is about 0.15cm, and the radial clearance between the solid body section 50 and the wall of the bore 22 is about 0.01cm.

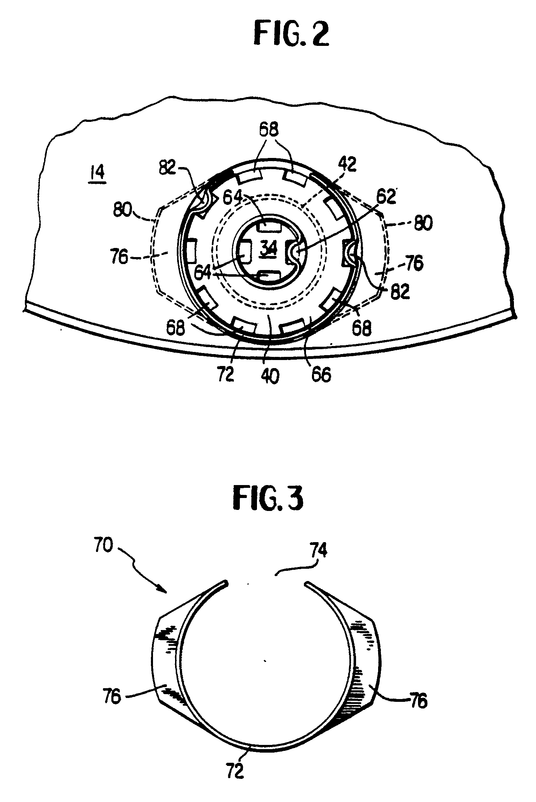

Referring again to Fig. 1, once the nut 40 has been threaded onto the thread portion 36 of the retaining pin 16 and properly torqued, it is desirable to secure it against working itself loose. For this purpose, the end portion 34 of the shank 28 is provided with crimp-receiving formations in the form of longitudinal grooves 64 spaced substantially equidistantly apart thereabout (see also Fig. 2), and the nut 40 is provided with a tubular crimpable extension 60 which has the part of the end portion 34 with the longitudinal grooves 64 coaxially received therein and is crimped to interlock with the grooves 64. The tubular crimpable extension 60 is formed integral with the nut 40, its wall thickness being such, e.g. 0.5mm, as to render it crimpable. It should be understood that even though only one crimp 62 is shown in Figs. 1 and 2, in practice, pairs of such crimps will be formed simultaneously into diametrically opposed crimp-receiving grooves 64. If the retaining pin assembly 10 is to be retrofitted in an existing nuclear reactor, crimping will be done, of course, by means of a suitable, remotely controlled tool (not shown) enabling the crimping operation to be performed under water and without risk of personnel exposure to harmful radiation.

It is to be expected that spatial restrictions will often make it difficult, if not impossible, to torque the nut 40 by means of a hex-wrench-like tool. Therefore, the nut 40 of the improved retaining pin assembly 10 has longitudinal splines 66 and spline grooves 68 (see Fig. 2) formed on the outer periphery thereof, which splines and spline grooves are adapted to be engaged with a correspondingly splined torquing tool (not shown) requiring less space than a wrench.

The improved retaining pin assembly 10 also includes a nut retainer, generally designated with reference numeral 70 and shown in detail in Fig. 3, which is a longitudinally split sleeve-like member having a substantially cylindrical wall portion 72 with a longitudinal split 74 therein, and lateral tabs 76 disposed adjacent one end of the cylindrical wall portion 72 and extending radially therefrom in opposite directions.

As seen from Figs. 1 and 2, the nut retainer 70 is positioned around a lower portion of the securing and lock nut 40 and seated in a counter-bore 78 formed in the passage 26 of the guide-tube flange 14 from the upper surface thereof and terminating in an annular groove 80 having the tabs 76 of the nut retainer 70 engaged therein. In the illustrated embodiment, the counter-bore 78 is actually formed into the counter-bore 44 and defines an enlarged-diameter portion thereof. Alternatively, the counter-bore 44 itself could be sufficiently widened throughout its length to accommodate both the nut 40 and the cylindrical wall portion 72 of the nut retainer 70, in which event the annular groove 80 would extend of course direct from the counter-bore 44.

The nut retainer 70 is installed, before the locking nut 40, by squeezing it together, as enabled by its longitudinal split 74, sufficiently to permit its insertion into the counter-bore 78. Once the nut retainer 70 is inserted and its tabs 76 are aligned with the groove 80, the compressive force thereon is released to enable the nut retainer 70 elastically to expand to its normal size and thereby to engage its tabs 76 with the groove 80 which now will cooperate with the tabs 76 to secure the retainer 70 against axial displacement thereof. Thereafter, the locking nut 40 is threaded onto the support pin 16 and then is torqued, as described above.

With both the locking nut retainer 70 and the locking nut 40 thus in place, the latter extends axially through the nut retainer 70, as seen from Figs. 1 and 2, and portions of the cylindrical wall 72 of the nut retainer, which may have a thickness of 0.5mm, can now be crimped, as at 82, into at least some of the spline grooves 68 of the nut 40 so as to form, between the latter and the retainer 70, a mechanical bond capable, in the event of failure of the shank portion 28 of the retaining pin, of holding the nut and any retaining-pin fragment connected thereto firmly in place until the failed retaining pin assembly can be conveniently removed and replaced, which latter operation is greatly facilitated by the non-welded construction of the improved retaining pin assembly 10. As apparent from Figs. 1 and 2, the nut retainer 70, in addition to safeguarding against dislodgement of failed pin assembly parts, also serves as a backup for the crimp connection between the retaining pin 16 and the securing and lock nut 40 in that it will prevent any rotation of the nut relative to the retaining pin even in the unlikely event that all of the crimps 62 on the crimpable portion 60 of the nut 40 should corrode away and fail.

**Claims**

1. A nuclear reactor including a plurality of control-rod guide tubes each of which has a radial flange and is connected to a structural member by means of retaining pin assemblies at least one (10) of which comprises a retaining pin (16) and a securing nut (40), said retaining pin having a first pin portion (18) which extends through a passage (26) in the flange (14) of the associated guide tube and has said securing nut threadedly engaged therewith so as to fasten the retaining pin assembly securely to said flange, and said retaining pin having a second pin portion (20) which comprises a split-leaf base section (24) and extends into a bore (22) of said structural member (12), characterized in that said second pin portion (20) includes a solid body section (50) which is disposed adjacent the end thereof contiguous to the first pin portion, and which has a diametral dimension providing a close-clearance fit between the solid body section (50) and the wall of said bore (22), said split-leaf base section (24) comprising a split stem (54) which has a smaller diametral dimension than said solid body section (50) and extends axially therefrom, and which split stem (54) terminates in a split end section (56) maintained radially biased against the wall of said bore (22).

2. A nuclear reactor according to claim 1, characterized in that said retaining pin (16) includes an annular intermediate shoulder (30) which is seated in a counterbore (48) in said passage (26) formed therein from the side of the guide-tube flange (14) proximate to said structural member (12).

3. A nuclear reactor according to claim 2, characterized in that said solid body section (50) and the annular shoulder (30) are contiguous to each other, the latter having a larger diametral dimension than the solid body section (50).

4. A nuclear reactor according to claim 2, characterized in that said solid body section (50) extends axially into said counterbore (48) and defines said annular shoulder.

5. A nuclear reactor according to any one of the preceding claims, characterized in that said retaining pin (16) is a unitary member.

6. A nuclear reactor according to claim 5, characterized in that the unitary retaining pin (16) is made of stainless steel.

7. A nuclear reactor according to any one of the preceding claims, characterized in that said, first pin portion (18) comprises a shank (28) having an externally threaded portion (36), said securing nut (40) being threadedly engaged with the externally threaded portion (36) of said shank (28) and seated in a counterbore (44) formed in said passage (26) from the side of the guide-tube flange (14) distant from said structural member (12).

8. A nuclear reactor according to claim 7, characterized in that said shank (28) has an end portion (34) having crimp-receiving formations (64) disposed on the outer periphery thereof, said securing nut (40) having a tubular crimpable extension (60) formed integral therewith and crimped into locking engagement with said crimp-receiving formations (64) on the end portion (34) of said shank (28).

9. A nuclear reactor according to claim 8, characterized in that said crimp-receiving formations (64) are longitudinal grooves spaced substantially equidistantly from each other about said end portion (34) of the shank (28).

10. A nuclear reactor according to claim 7, 8 or 9, characterized in that said retaining pin assembly (10) includes a sleeve-like , longitudinally split nut retainer (70) seated in a portion of said counterbore (44) formed in the control-tube flange (14) from said distant side thereof, said nut retainer (70) having a tubular wall portion (72) which substantially encircles a part of the securing nut (40) and is connected thereto, and lateral tabs (76) which are engaged in an annular groove (80) formed in a wall portion of said counterbore (44) and cooperating with said tabs to secure the nut retainer (70) against axial displacement thereof.

11. A nuclear reactor according to claim 10, characterized in that said securing nut (40) has longitudinal torque-tool receiving splines (66) and spline grooves (68) formed on the outer periphery thereof, said tubular wall portion (72) of the nut retainer (70) being crimped into a sufficient number of said spline grooves (68) to form a firm mechanical bond between the nut retainer (70) and the securing nut (40).

## Revendications

1. Réacteur nucléaire comprenant une pluralité de tubes de guidage de barres de commande dont chacun comporte une bride radiale et est relié à un élément de structure au moyen d'assemblages à axe de retenue dont au moins un (10) comprend un axe (16) de retenue et un écrou (40) de fixation, ledit axe de retenue ayant une première partie (18) d'axe qui s'étend à travers un passage (26) situé dans la bride (14) du tube de guidage associé et est engagée par vissage avec ledit écrou de fixation de façon à assujettir fermement l'assemblage à axe de retenue sur ladite bride, et ledit axe de retenue comportant une seconde partie (20) d'axe qui comprend une section (24) de base à lame fendue et s'étend dans un alésage (22) dudit élément (12) de structure, caractérisé en ce que ladite seconde partie (20) d'axe comprend une section (50) de corps plein qui est disposée au voisinage de son extrémité contiguë à la première partie d'axe, et dont la dimension diamétrale assure un ajustage serré entre la section (50) de corps plein et la paroi dudit alésage (22), ladite section (24) de base à lame fendue comprenant une tige (54) fendue dont le diamètre est inférieur à celui de ladite section (50) de corps plein et qui s'étend axialement à partir de celle-ci, ladite tige (54) fendue se terminant par une section (56) d'extrémité fendue sollicitée radialement contre la paroi dudit alésage (22).

2. Réacteur nucléaire selon la revendication 1, caractérisé en ce que ledit axe (16) de retenue comprend un épaulement (30) intermédiaire annulaire qui est logé dans un chambrage (48) formé dans ledit passage (26) à partir du côté de la bride (14) du tube de guidage proche dudit élément (12) de structure.

3. Réacteur nucléaire selon la revendication 2, caratérisé en ce que ladite section (50) de corps plein et ledit épaulement (30) annulaire sont contigus l'un à l'autre, ce dernier ayant un diamètre supérieur à celui de la section (50) de corps plein.

4. Réacteur nucléaire selon la revendication 2, caractérisé en ce que ladite section (50) de corps plein s'étend axialement à l'intérieur dudit chambrage (48) et définit ledit épaulement annulaire.

5. Réacteur nucléaire selon l'une quelconque des revendications précédentes, caractérisé en ce que ledit axe (16) de retenue est un élément unitaire.

6. Réacteur nucléaire selon la revendication 5, caractérisé en ce que l'axe de retenue unitaire (16) est réalisé en acier inoxydable.

7. Réacteur nucléaire selon l'une quelconque des revendications précédentes, caractérisé en ce que ladite première partie (18) d'axe comprend une tige (28) ayant une partie (36) à filetage externe, ledit écrou (40) de fixation étant engagé par vissage avec la partie (36) à filetage externe de ladite tige (28) et logé dans un chambrage (44) formé dans ledit passage (26) à partir du côté de la bride (14) du tube de guidage éloignée dudit élément (12) de structure.

8. Réacteur nucléaire selon la revendication 7, caractérisé en ce que ladite tige (28) présente une partie (34) d'extrémité comportant des parties (64) formées pour recevoir des éléments sertis et disposées sur sa périphérie externe, ledit écrou (40) de fixation ayant un prolongement (60) tubulaire apte à être serti, formé de façon solidaire avec celui-ci et verrouillé par sertissage avec lesdites parties (64) de réception d'éléments sertis, formées sur la partie (34) d'extrémité de ladite tige (28).

9. Réacteur nucléaire selon la revendication 8, caractérisé en ce que lesdites parties (64) de réception d'éléments sertis sont des rainures longitudinales espacées de façon sensiblement équidistante les unes des autres autour de la partie (34) d'extrémité de la tige (28).

10. Réacteur nucléaire selon la revendication 7, 8 ou 9, caractérisé en ce que ledit assemblage (10) à axe de retenue comprend un élément (70) de retenue d'écrou fendu longitudinalement et en forme de manchon, logé dans une partie dudit chambrage (44) formé dans la bride (14) du tube de guidage à partir dudit côté éloigné de celle-ci, ledit élément (70) de retenue d'écrou comportant une partie (72) de paroi tubulaire qui encercle sensiblement une partie de l'écrou (40) de fixation et qui y est reliée, et des pattes (76) latérales qui sont engagées dans une rainure (80) formée dans une partie de paroi dudit chambrage (44) et coopérant avec lesdites pattes pour assujettir l'élément (70) de retenue d'écrou de façon à interdire son déplacement axial.

11. Réacteur nucléaire selon la revendication 10, caractérisé en ce que l'écrou (40) de retenue comporte des nervures (66) de réception d'outil d'application de couple et des cannelures (68) formées sur sa périphérie externe, ladite partie (72) de paroi tubulaire de l'élément (70) de retenue d'écrou étant sertie dans un nombre suffisant desdites cannelures (68) pour former un lien mécanique ferme entre l'élément (70) de retenue d'écrou et l'écrou (40) de fixation.

## Patentansprüche

1. Kernreaktor mit einer Vielzahl von Regelstabführungsrohren, von denen jedes einen radialen Flansch aufweist und mit einem Bauteil mittels Haltestifteinrichtungen verbunden ist, von denen wenigstens eine Haltestifteinrichtung (10) einen Haltestift (16) und eine Haltemutter (40) umfaßt, wobei der Haltestift einen ersten Stiftabschnitt (18) aufweist, der sich durch einen Durchlaß (26) im Flansch (14) des zugeordneten Führungsrohres erstreckt und die Haltemutter damit in Schraubverbindung hat, um die Haltestifteinrichtung sicher am Flansch zu befestigen, und wobei der Haltestift einen zweiten Stiftabschnitt (20) aufweist, der einen geschlitzten Basisteil (24) umfaßt und sich in eine Bohrung (22) des Bauteiles (12) erstreckt, dadurch gekennzeichnet, daß der zweite Stiftabschnitt (20) einen massiven Körperteil (50) enthält, der benachbart zu seinem Ende und angrenzend zum ersten Stiftabschnitt angeordnet ist und der einen Durchmesser aufweist, der einen engtolerierten Sitz zwischen dem massiven Körperteil (50) und der Wand der Bohrung (22) ermöglicht, wobei der geschlitzte Basisteil (24) einen geschlitzten Zapfen (54) umfaßt, der einen kleineren Durchmesser als der massive Körperteil (50) aufweist und sich von diesem axial erstreckt, und wobei der geschlitzte Zapfen (54) in einem geschlitzten Endabschnitt (56) endet, der gegen die Wand der Bohrung (22) radial vorgespannt gehalten ist.

2. Kernreaktor nach Anspruch 1, dadurch gekennzeichnet, daß der Haltestift (16) eine ringförmige Zwischenschulter (30) enthält, die im Durchlaß (26) in einer Senkung (48), die darin von der nahe dem Bauteil (12) liegenden Seite des Führungsrohrflansches (14) her ausgebildet ist, sitzt.

3. Kernreaktor nach Anspruch 2, dadurch gekennzeichnet, daß der massive Körperteil (50) und die ringförmige Schulter (30) aneinander angrenzend sind, wobei die letztere einen größeren Durchmesser als der massive Körperteil (50) aufweist.

4. Kernreaktor nach Anspruch 2, dadurch gekennzeichnet, daß sich der massive Körperteil (50) axial in die Senkung (48) erstreckt und die ringförmige Schulter festlegt.

5. Kernreaktor nach einem der vorhergehenden Ansprüche, dadurch gekennzeichnet, daß der Haltestift (16) ein einheitliches Element ist.

6. Kernreaktor nach Anspruch 5, dadurch gekennzeichnet, daß der einheitliche Haltestift (16) aus rostfreiem Stahl hergestellt ist.

7. Kernreaktor nach einem der vorhergehenden Ansprüche, dadurch gekennzeichnet, daß der erste Stiftabschnitt (18) einen Schaft (28) mit einem Außengewindeabschnitt (36) umfaßt, wobei die Haltemutter (40) in Schraubverbindung mit dem Außengewindeabschnitt (36) des Schaftes (28) steht und in einer Senkung (44) sitzt, die im Durchlaß (26) von der vom Bauteil (12) entfernten Seite des Führungsrohrflansches (14) her ausgebildet ist.

8. Kernreaktor nach Anspruch 7, dadurch gekennzeichnet, daß der Schaft (28) einen Endabschnitt (34) mit falzaufnehmenden Ausbildungen (64) aufweist, die an dessen äußerem Umfang angeordnet sind, und daß die Haltemutter (40) eine rohrförmige falzbare Verlängerung (60) aufweist, die mit ihr einstückig ausgebildet ist und in verriegelnde Verbindung mit den falzaufnehmenden Ausbildungen (64) auf dem Endteil (34) des Schaftes (28) gefalzt ist.

9. Kernreaktor nach Anspruch 8, dadurch gekennzeichnet, daß die falzaufnehmenden Ausbildungen (64) Längsrillen sind, die im wesentlichen mit gleichem Abstand voneinander um das Endteil (34) des Schaftes (28) herum verteilt sind.

10. Kernreaktor nach Anspruch 7, 8 oder 9, dadurch gekennzeichnet, daß die Haltestifteinrichtung (10) einen büchsenähnlichen längsgeschlitzten Mutternhalter (70) aufweist, der in einem Abschnitt der Senkung (44), die in dem Regelrohrflansch (14) von ihrer entfernten Seite her ausgebildet ist, sitzt, wobei der Mutternhalter (70) einen rohrförmigen Wandabschnitt (72) aufweist, der im wesentlichen einen Teil der Haltemutter (40) umfaßt und damit verbunden ist, und seitliche Streifen (76), die in eine ringförmige Rille (80), die in einem Wandabschnitt der Senkung (44) ausgebildet ist und mit den Streifen zum Sichern des Mutternhalters (70) gegen dessen axiale Verschiebung zusammenwirkt, eingreifen.

11. Kernreaktor nach Anspruch 10, dadurch gekennzeichnet, daß die Haltemutter (40) Längskeilwellenrücken (66) zur Drehmomentwerkzeugaufnahme und an deren äußeren Umfang ausgebildete Keilwellennuten (68) aufweist, wobei der rohrförmige Wandabschnitt (72) des Mutternhalters (70) in eine ausreichende Anzahl der Keilwellennuten (68) zum Bilden einer festen mechanischen Verbindung zwischen dem Mutternhalter (70) und der Haltemutter (40) gefalzt ist.

FIG. I

# FIG. 2

# FIG. 3